(19) Europäisches Patentamt / European Patent Office / Office européen des brevets

(11) **EP 4 715 079 A1**

(12) **EUROPEAN PATENT APPLICATION**
published in accordance with Art. 153(4) EPC

(43) Date of publication:
**25.03.2026 Bulletin 2026/13**

(21) Application number: **24888317.5**

(22) Date of filing: **02.08.2024**

(51) International Patent Classification (IPC):
$C22C\ 9/00^{(2006.01)}$    $C21D\ 9/46^{(2006.01)}$
$C22C\ 38/48^{(2006.01)}$    $C22C\ 38/54^{(2006.01)}$
$C25B\ 9/60^{(2021.01)}$    $C25B\ 13/04^{(2021.01)}$
$H01M\ 8/12^{(2016.01)}$    $H01M\ 8/021^{(2016.01)}$

(52) Cooperative Patent Classification (CPC):
C21D 9/46; C22C 38/00; C22C 38/48; C22C 38/54;
C25B 9/60; C25B 13/04; H01M 8/021; H01M 8/12;
Y02E 60/50

(86) International application number:
**PCT/JP2024/027812**

(87) International publication number:
**WO 2025/100015 (15.05.2025 Gazette 2025/20)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **06.11.2023 JP 2023189621**

(71) Applicant: **JFE Steel Corporation
Tokyo, 100-0011 (JP)**

(72) Inventors:
• **FEBRY, Muhammad
Tokyo 100-0011 (JP)**

• **NAKAMURA, Tetsuyuki
Tokyo 100-0011 (JP)**
• **MIZUTANI, Akito
Tokyo 100-0011 (JP)**
• **YANO, Takayoshi
Tokyo 100-0011 (JP)**
• **YOSHINO, Masataka
Tokyo 100-0011 (JP)**
• **SUGIHARA, Reiko
Tokyo 100-0011 (JP)**

(74) Representative: **Grünecker Patent- und
Rechtsanwälte
PartG mbB
Leopoldstraße 4
80802 München (DE)**

(54) **FERRITIC STAINLESS STEEL FOR SOLID OXIDE ELECTROCHEMICAL CELLS**

(57) Stainless steel that has excellent oxidation resistance, resistance to Cr poisoning, and electrical conductivity not only in the operating environments of SOFCs but also in the operating environments of SOECs. The chemical composition is appropriately controlled, in particular, to Al: 0.60 mass% to 1.50 mass%, Nb: 0.20 mass% to 0.45 mass%, Cr: 20.0 mass% to 30.0 mass%, and Si: 0.05 mass% to 0.50 mass%, and the relationships of the following expressions (1) and (2) are satisfied: $0.03 \times [Cr] + [Al] \leq 2.20$ ...(1), $0.44 \times [Si] + [Al] \leq 1.52$ ...(2).

*FIG. 1*

EP 4 715 079 A1

**Description**

TECHNICAL FIELD

The present disclosure relates to ferritic stainless steel for solid oxide electrochemical cells (hereinafter also referred to as SOCs) that has excellent oxidation resistance, resistance to Cr poisoning, and electrical conductivity in environments containing high-temperature water vapor.

BACKGROUND

Solid oxide fuel cells (hereinafter also referred to as SOFCs) have been attracting attention as a next-generation energy source. SOFCs operate at high temperatures of 500 °C to 900 °C. SOFCs have the following excellent features:

- There is no need to use a catalyst for the electrode reaction.
- A variety of fuel gases can be used, including coal reformed gas.
- It is possible to combine with a gas turbine or steam turbine power generator that utilizes high-temperature exhaust heat.

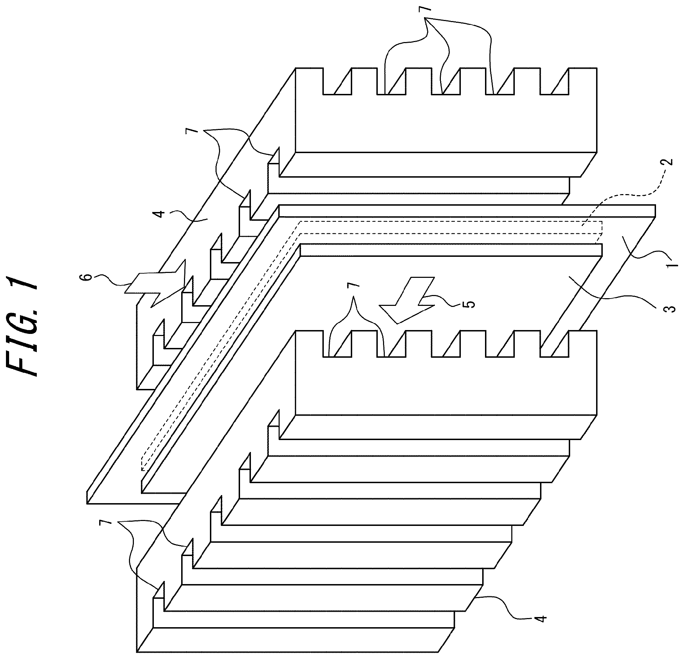

As illustrated in FIG. 1, for example, an SOFC is composed of an electrolyte 1, an air electrode 2 and a fuel electrode 3, and an interconnector 4 (sometimes called a separator). Typically, the electrolyte 1 is an ion-conductive solid electrolyte such as yttria-stabilized zirconia (YSZ). On one side of the electrolyte 1 is attached the air electrode 2 such as $(La,Sr)MnO_3$. On the other side of the electrolyte 1 is attached the fuel electrode 3 such as Ni/YSZ (cermet of Ni and yttria-stabilized zirconia). The electrolyte 1 serves as a partition, and a fuel gas 5 such as hydrogen gas is supplied to one side, and an oxidizing gas 6 such as air is supplied to the other side, thereby generating electricity. Further, the interconnector 4 serves to support the three layers of the electrolyte 1, the air electrode 2, and the fuel electrode 3, and to form a gas flow path 7. In addition, the interconnector 4 also serves to carry current.

As materials for the above-mentioned SOFC members, particularly for the interconnector, metal materials such as stainless steels described in Patent Literature (PTL) 1 to 7 have been proposed.

CITATION LIST

Patent Literature

PTL 1: JP H07-166301 A
PTL 2: JP H07-145454 A
PTL 3: JP H09-157801 A
PTL 4: JP H10-280103 A
PTL 5: JP 2003-187828 A
PTL 6: JP 2005-206884 A
PTL 7: WO 2018/008658 A1

SUMMARY

(Technical Problem)

Recently, solid oxide electrolytic cells (hereinafter also referred to as SOECs), which apply SOFC technology, have been attracting attention.

SOECs are configured as illustrated in FIG. 1, similarly to SOFCs. In SOECs, oxidized species are electrochemically reduced by electrical or thermal means. For example, when an oxidized species is water, hydrogen is produced at the fuel electrode. When the oxidized species are a mixture of water and carbon dioxide, a mixture of carbon monoxide and hydrogen is produced, which as one example is methanated.

Materials used for SOEC members, particularly interconnectors, are required to have excellent oxidation resistance, resistance to Cr poisoning, and electrical conductivity, similar to materials used for SOFC members. Here, Cr poisoning refers to the deterioration of electrode performance due to adhesion of Cr oxides. For example, when Cr oxides are volatilized from the surface of a stainless steel containing a large amount of Cr in the chemical composition, they adhere to the electrode, causing electrode performance to degrade.

However, the operating environments of SOFCs and SOECs, particularly the amount of water vapor in the atmosphere, are significantly different. Therefore, the metal materials such as stainless steels described in PTL 1 to 7, which were developed for SOFCs, did not provide sufficient oxidation resistance and resistance to Cr poisoning for the operating environments of SOECs.

In view of the current situation, it would be helpful to provide stainless steel, particularly ferritic stainless steel for SOCs, that has excellent oxidation resistance, resistance to Cr poisoning, and electrical conductivity not only in the operating environments of SOFCs but also in the operating environments of SOECs. Hereinafter, any numerical range expressed using "to" means a range that includes the numerical values written before and after "to" as the lower limit and the upper limit, respectively, except when "more than" or "less than" is also written.

Here, a solid oxide electrochemical cell (SOC) is a cell including an electrolyte made of solid oxide, an air electrode, and a fuel electrode. SOCs include the above-mentioned SOFCs and SOECs, as well as solid oxide reversible cells (SORCs) that combine the functions of both SOFCs and SOECs.

(Solution to Problem)

The inventors conducted intensive studies to solve the technical problem outlined above. As a result, it was discovered that the above can be achieved by appropriately controlling the chemical composition of ferritic stainless steel, particularly by controlling the composition so as to simultaneously satisfy the following (a) to (c):

(a) The Al content is 0.60 mass% to 1.50 mass%, and the Nb content is 0.20 mass% to 0.45 mass%.
(b) The Cr content is 20.0 mass% to 30.0 mass%, and the Si content is 0.05 mass% to 0.50 mass%.
(c) The relationships of the following expressions (1) and (2) are satisfied.

$$0.03 \times [Cr] + [Al] \leq 2.20 \qquad \ldots(1)$$

$$0.44 \times [Si] + [Al] \leq 1.52 \qquad \ldots(2)$$

Here, [Si], [Cr], and [Al] are the contents, in mass%, of Si, Cr, and Al in the above-mentioned chemical composition, respectively.

The reason for this is considered to be as follows. Both Al and Cr are elements that form oxides on the surface of ferritic stainless steel. However, Al oxides such as $Al_2O_3$ are electrically insulating. Therefore, when ferritic stainless steel contains a large amount of Al, an oxide coating formed on the surface of the ferritic stainless steel (hereinafter also referred to as a surface oxide coating) becomes a coating mainly composed of Al oxides. As a result, electrical resistance increases and electrical conductivity decreases.

However, when the surface oxide coating is a coating mainly composed of Cr oxides, Cr poisoning occurs. Regarding this point, when Nb is contained in an amount of 0.20 mass% to 0.45 mass%, preferential oxidation of Al in the steel is promoted. Further, operating environments of SOECs have a high oxygen partial pressure and a large amount of water vapor, making it difficult for Al oxides to form. Even in such an operating environment of SOECs, by causing 0.05 mass% to 0.50 mass% of Si to be contained in addition to the Nb described above, it becomes possible to preferentially oxidize Al in the steel. Further, while containing defined amounts of Nb and Si, the Al content is controlled to 0.60 mass% to 1.50 mass% and the Cr content is controlled to 20.0 mass% to 30.0 mass%, and the relationships of the above expressions (1) and (2) are satisfied. This makes it possible to thin the surface oxide coating mainly composed of Al oxides while allowing the surface oxide coating to partially contain Cr oxides.

This surface oxide coating is mainly composed of Al oxides. Therefore, excellent oxidation resistance can be obtained even in the operating environments of SOECs, which are more severe than the operating environments of SOFCs, that is, in a severe environment of high temperature, high oxygen partial pressure, and a large amount of water vapor. Further, in the above-mentioned surface oxide coating, Cr oxides are partially contained in Al oxides. Therefore, volatilization of the Cr oxides is inhibited by the Al oxides in the vicinity thereof. As a result, excellent resistance to Cr poisoning can be obtained even in a severe environment containing high-temperature water vapor. Further, Cr oxides partially formed in the surface oxide coating act as current paths, securing electrical conductivity.

For these reasons, the inventors believe that ferritic stainless steel having a chemical composition controlled so as to simultaneously satisfy the above conditions (a) to (c) can achieve both excellent oxidation resistance and resistance to Cr poisoning, as well as excellent electrical conductivity, not only in the operating environments of SOFCs, but also in the operating environments of SOECs.

The present disclosure is based on these discoveries and further studies.

Primary features of the present disclosure are as follows.

1. Ferritic stainless steel for solid oxide electrochemical cells, the ferritic stainless steel comprising a chemical composition containing (consisting of), in mass%,

C: 0.010 % or less,
Si: 0.05 % to 0.50 %,
Mn: 0.05 % to 0.50 %,
P: 0.050 % or less,
S: 0.010 % or less,
Cr: 20.0 % to 30.0 %,
Al: 0.60 % to 1.50 %,
Ni: 1.00 % or less,
Nb: 0.20 % to 0.45 %,
Mo: 2.00 % to 2.90 %, and
N: 0.025 % or less,

with the balance being Fe and inevitable impurities, satisfying the relationships of the following expressions (1) and (2):

$$0.03 \times [\text{Cr}] + [\text{Al}] \leq 2.20 \qquad ...(1)$$

$$0.44 \times [\text{Si}] + [\text{Al}] \leq 1.52 \qquad ...(2)$$

where [Si], [Cr], and [Al] are the contents, in mass%, of Si, Cr, and Al in the chemical composition, respectively.

2. The ferritic stainless steel for solid oxide electrochemical cells according to 1, above, wherein the chemical composition further contains, in mass%, one or more selected from the group consisting of

Cu: 0.50 % or less,
Co: 1.00 % or less, and
W: 3.00 % or less.

3. The ferritic stainless steel for solid oxide electrochemical cells according to 1 or 2, above, wherein the chemical composition further contains, in mass%, one or more selected from the group consisting of

Ti: 1.00 % or less,
V: 1.00 % or less,
Zr: 0.50 % or less,
B: 0.0050 % or less,
Mg: 0.0050 % or less,
Ca: 0.0050 % or less, and
REM: 0.20 % or less.

(Advantageous Effect)

According to the present disclosure, it is possible to obtain stainless steel that has excellent oxidation resistance, resistance to Cr poisoning, and electrical conductivity not only in the operating environments of SOFCs but also in the operating environments of SOECs.

BRIEF DESCRIPTION OF THE DRAWINGS

In the accompanying drawings:
FIG. 1 is a diagram schematically illustrating an example of an SOFC.

DETAILED DESCRIPTION

The following describes embodiments of the present disclosure. First, the chemical composition of the ferritic stainless steel for SOCs according to an embodiment of the present disclosure is described. Hereinafter, although the unit in all chemical compositions is "mass%", this may be indicated simply as "%", unless otherwise specified.

C: 0.010 % or less

C has an effect of increasing strength at high temperatures. To obtain this effect, C content is preferably 0.001 % or more. The C content is more preferably 0.003 % or more. However, when the C content exceeds 0.010 %, toughness and formability of the steel decrease. The C content is therefore 0.010 % or less. The C content is more preferably 0.008 % or less.

Si: 0.05 % to 0.50 %

Si has the effects of promoting oxidation of Al and improving oxidation resistance. Further, Si also has an effect of suppressing evaporation of Cr oxides. Further, when Si is contained together with Cr, a thin and dense surface oxide coating is formed in the early stage of oxidation. This decreases oxygen partial pressure and promotes the formation of Al oxides such as $Al_2O_3$. To obtain these effects, Si content is 0.05 % or more. The Si content is preferably 0.10 % or more. However, when the Si content exceeds 0.50 %, a thick layer of $SiO_2$ having low electrical conductivity is formed in the vicinity of the interface between the surface oxide coating and the base metal, resulting in a decrease in the electrical conductivity. For this reason, the Si content is 0.50 % or less. The Si content is preferably 0.30 % or less. The Si content is more preferably 0.20 % or less.

Mn: 0.05 % to 0.50 %

Mn has an effect of increasing separation resistance of oxide scale. To obtain this effect, Mn content is 0.05 % or more. The Mn content is preferably 0.10 % or more. However, when the Mn content exceeds 0.50 %, oxide scale may grow abnormally, resulting in a decrease in oxidation resistance. Further, the steel hardens at room temperature, reducing workability. The Mn content is therefore 0.50 % or less. The Mn content is preferably 0.40 % or less. The Mn content is more preferably 0.30 % or less.

P: 0.050 % or less

P is a harmful element that reduces the toughness of the steel. Accordingly, a lower P content is preferable. The P content is therefore 0.050 % or less. The P content is preferably 0.040 % or less. The P content is more preferably 0.030 % or less. A lower limit of the P content is not particularly limited, and may be 0 %. However, excessive dephosphorization leads to increased costs, and therefore the P content is preferably 0.0005 % or more.

S: 0.010 % or less

S is a harmful element that not only adversely affects formability but also decreases corrosion resistance, which is a basic property of stainless steel. Accordingly, a lower S content is preferable. The S content is therefore 0.010 % or less. The S content is preferably 0.005 % or less. A lower limit of the S content is not particularly limited, and may be 0 %. However, excessive desulfurization leads to increased costs, and therefore the S content is preferably 0.0001 % or more.

Cr: 20.0 % to 30.0 %

Cr has an effect of partially forming a $Cr_2O_3$ coating in the surface oxide coating mainly composed of Al oxide, thereby securing electrical conductivity. To obtain this effect, Cr content is 20.0 % or more. However, when Cr is contained in excess, particularly when the Cr content exceeds 30.0 %, the volatilization of Cr oxides is promoted. This also leads to degradation of workability. The Cr content is therefore 30.0 % or less. The Cr content is preferably 28.0 % or less. The Cr content is more preferably 26.0 % or less. The Cr content is even more preferably 24.0 % or less.

Al: 0.60 % to 1.50 %

When Al is contained together with Nb, Al preferentially forms oxides over Cr, and has an effect of improving oxidation resistance. Further, Al preferentially forming oxides can suppress Cr poisoning of the electrode due to volatilization of Cr oxides. To obtain these effects, Al content is 0.60 % or more. The Al content is preferably 0.80 % or more. The Al content is more preferably 1.00 % or more. On the other hand, when the Al content exceeds 1.50 %, the steel becomes harder and the workability decreases. Further, it becomes impossible to allow Cr oxides to exist partially in the surface oxide coating. Further, the thickness of the surface oxide coating, which is mainly composed of Al oxides, increases. As a result, the electrical resistance increases. The Al content is therefore 1.50 % or less. The Al content is preferably 1.40 % or less. The Al content is more preferably 1.30 % or less. The Al content is even more preferably 1.25 % or less.

Ni: 1.00 % or less

Ni has an effect of improving the toughness and oxidation resistance of the steel. To obtain this effect, Ni content is preferably 0.01 % or more. The Ni content is more preferably more than 0.05 %. On the other hand, Ni is a $\gamma$-phase forming element. Therefore, when the Ni content exceeds 1.00 %, a $\gamma$-phase is formed at high temperatures and the oxidation resistance is decreased. Further, when the oxidation resistance decreases, the electrical resistance increases. The Ni content is therefore 1.00 % or less. The Ni content is preferably less than 0.50 %. The Ni content is more preferably less than 0.20 %.

Nb: 0.20 % to 0.45 %

Nb has an effect of increasing the high-temperature strength of the steel. Further, Nb has an effect of promoting the oxidation of Al and improving the oxidation resistance. Further, Nb has an effect of suppressing evaporation of Cr oxides. Therefore, Nb is an important element in the ferritic stainless steel for SOCs according to an embodiment of the present disclosure. In particular, when Nb is contained together with Cr, a thin and dense surface oxide coating is formed in the early stage of oxidation. This decreases oxygen partial pressure and promotes the formation of Al oxides such as $Al_2O_3$. To obtain these effects, Nb content is 0.20 % or more. The Nb content is preferably 0.25 % or more. The Nb content is more preferably 0.30 % or more. However, when the Nb content exceeds 0.45 %, the steel becomes harder and the workability decreases. The Nb content is therefore 0.45 % or less. The Nb content is preferably 0.40 % or less. The Nb content is more preferably 0.35 % or less.

Mo: 2.00 % to 2.90 %

Mo has the effects of increasing strength at high temperatures and improving the oxidation resistance. To obtain these effects, Mo content is 2.00 % or more. The Mo content is preferably 2.10 % or more. The Mo content is more preferably 2.20 % or more. On the other hand, when Mo is contained in excess, particularly when the Mo content exceeds 2.90%, the steel becomes harder and the workability decreases. The Mo content is therefore 2.90 % or less. The Mo content is preferably 2.70 % or less. The Mo content is more preferably 2.50 % or less. The Mo content is even more preferably 2.30 % or less.

N: 0.025 % or less

N is an element that decreases the toughness and formability of the steel, and a lower N content is preferable. In particular, when the N content exceeds 0.025 %, the toughness and formability of the steel may be greatly decreased. The N content is therefore 0.025 % or less. The N content is preferably 0.020 % or less. The N content is more preferably less than 0.015 %. A lower limit of the N content is not particularly limited, and may be 0 %. However, excessive denitrogenation leads to increased costs, and therefore the N content is preferably 0.001 % or more.
Further, in the ferritic stainless steel for SOCs according to an embodiment of the present disclosure, it is important that, in addition to the above-described chemical composition, the Cr content and the Al content satisfy the above expression (1), and the Si content and the Al content satisfy the above expression (2).

$$0.03 \times [Cr] + [Al] \le 2.20 \qquad \ldots(1)$$

In the ferritic stainless steel for SOC according to an embodiment of the present disclosure, it is important to control the Cr content and the Al content within the above ranges, and also to make $0.03 \times [Cr] + [Al]$ be 2.20 or less. Here, when $0.03 \times [Cr] + [Al]$ exceeds 2.20, the volatilization of Cr oxides is promoted. Further, the thickness of the surface oxide coating, mainly composed of Al oxides, increases. As a result, the electrical resistance increases. Therefore, $0.03 \times [Cr] + [Al]$ is 2.20 or less. $0.03 \times [Cr] + [Al]$ is preferably 2.10 or less. $0.03 \times [Cr] + [Al]$ is more preferably 2.01 or less. A lower limit of $0.03 \times [Cr] + [Al]$ is not particularly limited. For example, $0.03 \times [Cr] + [Al]$ is preferably 1.30 or more.

$$0.44 \times [Si] + [Al] \le 1.52 \qquad \ldots(2)$$

In the ferritic stainless steel for SOCs according to an embodiment of the present disclosure, it is important to control the Si content and the Al content within the above ranges, and also to make 0.44 × [Si] + [Al] be 1.52 or less. Here, when 0.44 × [Si] + [Al] exceeds 1.52, the thickness of the surface oxide coating, mainly composed of Al oxides, increases. Further, Si oxides having low electrical conductivity are formed in the surface oxide coating mainly composed of Al oxides. As a result, the electrical resistance increases. Therefore, 0.44 × [Si] + [Al] is 1.52 or less. 0.44 × [Si] + [Al] is preferably 1.46 or less. 0.44 × [Si] + [Al] is more preferably 1.43 or less. A lower limit of 0.44 × [Si] + [Al] is not particularly limited. For example, 0.44 × [Si] + [Al] is preferably 0.60 or more.

Further, the chemical composition of the ferritic stainless steel for SOCs according to an embodiment of the present disclosure may optionally contain one or both of the following (A) and (B).

(A) One or more selected from the group consisting of Cu: 0.50 % or less, Co: 1.00 % or less, and W: 3.00 % or less
(B) One or more selected from the group consisting of Ti: 1.00 % or less, V: 1.00 % or less, Zr: 0.50 % or less, B: 0.0050 % or less, Mg: 0.0050 % or less, Ca: 0.0050 % or less, and REM: 0.20 % or less

Cu: 0.50 % or less

Cu has an effect of improving the corrosion resistance of the steel. To obtain this effect, Cu content is preferably 0.01 % or more. The Cu content is more preferably 0.05 % or more. The Cu content is even more preferably 0.10 % or more. On the other hand, when the Cu content exceeds 0.50 %, oxide scale becomes more likely to separate, resulting in a decrease in the oxidation resistance. Therefore, when Cu is contained, the Cu content is 0.50 % or less. The Cu content is preferably 0.35 % or less. The Cu content is more preferably 0.20 % or less.

Co: 1.00 % or less

Co has an effect of improving the toughness of the steel. To obtain this effect, Co content is preferably 0.01 % or more. The Co content is more preferably 0.03 % or more. The Co content is even more preferably 0.05 % or more. On the other hand, when the Co content exceeds 1.00 %, the toughness and the workability of the steel are decreased. Therefore, when Co is contained, the Co content is 1.00 % or less. The Co content is preferably less than 0.30 %. The Co content is more preferably 0.10 % or less. The Co content is even more preferably 0.07 % or less.

W: 3.00 % or less

Like Mo, W has an effect of improving strength at high temperatures through solid solution strengthening. To obtain this effect, W content is preferably 0.01 % or more. The W content is more preferably 0.30 % or more. The W content is even more preferably 1.00 % or more. On the other hand, when the W content exceeds 3.00 %, the steel becomes harder and the workability decreases. Further, firm scale is formed during the annealing process during production, making it difficult to descale during pickling. Therefore, when W is contained, the W content is 3.00 % or less. The W content is preferably 2.50 % or less. The W content is more preferably 2.00 % or less.

Ti: 1.00 % or less

Ti has an effect of improving the workability and oxidation resistance of the steel. To obtain this effect, Ti content is preferably 0.01 % or more. The Ti content is more preferably 0.03 % or more. The Ti content is even more preferably 0.05 % or more. However, when the Ti content exceeds 1.00 %, coarse Ti(C,N) precipitates are formed, which decreases the toughness and surface characteristics. Therefore, when Ti is contained, the Ti content is 1.00 % or less. The Ti content is preferably 0.50 % or less. The Ti content is more preferably 0.30 % or less.

V: 1.00 % or less

V has an effect of improving the workability and oxidation resistance of the steel. To obtain this effect, V content is preferably 0.01 % or more. The V content is more preferably 0.03 % or more. The V content is even more preferably 0.05 % or more. However, when the V content exceeds 1.00 %, coarse V(C, N) precipitates are formed, which decreases the toughness and surface characteristics. Therefore, when V is contained, the V content is 1.00 % or less. The V content is preferably 0.50 % or less. The V content is more preferably 0.20 % or less.

Zr: 0.50 % or less

Zr has an effect of improving oxidation resistance. To obtain this effect, Zr content is preferably 0.01 % or more.

The Zr content is more preferably 0.05 % or more. However, when the Zr content exceeds 0.50 %, Zr intermetallic compounds precipitate, embrittling the steel. Therefore, when Zr is contained, the Zr content is 0.50 % or less. The Zr content is preferably 0.25 % or less. The Zr content is more preferably 0.10 % or less.

B: 0.0050 % or less

B has an effect of improving the workability of the steel, particularly secondary workability. To obtain this effect, B content is preferably 0.0002 % or more. The B content is more preferably 0.0005 % or more. On the other hand, when the B content exceeds 0.0050 %, BN is formed and workability decreases. Therefore, when B is contained, the B content is 0.0050 % or less. The B content is preferably 0.0020 % or less. The B content is more preferably 0.0010 % or less.

Mg: 0.0050 % or less

Mg has an effect of helping prevent nozzle clogging due to precipitation of inclusions that is likely to occur during continuous casting. To obtain this effect, Mg content is preferably 0.0001 % or more. The Mg content is more preferably 0.0005 % or more. However, when the Mg content exceeds 0.0050 %, surface defects are more likely to occur. Therefore, when Mg is contained, the Mg content is 0.0050 % or less. The Mg content is preferably 0.0030 % or less. The Mg content is more preferably 0.0020 % or less.

Ca: 0.0050 % or less

Ca has an effect of helping prevent nozzle clogging due to precipitation of inclusions that is likely to occur during continuous casting. To obtain this effect, Ca content is preferably 0.0002 % or more. The Ca content is more preferably 0.0005 % or less. However, when the Ca content exceeds 0.0050 %, surface defects are more likely to occur. Therefore, when Ca is contained, the Ca content is 0.0050 % or less. The Ca content is preferably 0.0030 % or less. The Ca content is more preferably 0.0020 % or less.

REM: 0.20 % or less

REM is a generic term for Sc, Y, La, Ce, Pr, Nd, Pm, Sm, and Hf. These nine elements may be contained alone or in combination. REM content means the total content of these nine elements. REMs have an effect of improving adhesion of the surface oxide coating and improving the oxidation resistance. To obtain this effect, the REM content is preferably 0.01 % or more. The REM content is more preferably 0.05 % or more. On the other hand, when the REM content exceeds 0.20 %, surface defects are likely to occur. Therefore, when REM is contained, the REM content is 0.20 % or less. The REM content is preferably 0.10 % or less.

The balance of the chemical composition other than the above elements is Fe and inevitable impurities.

Further, the microstructure of the ferritic stainless steel for SOCs according to an embodiment of the present disclosure is a microstructure mainly composed of ferrite phase, specifically, a microstructure having a volume fraction of ferrite phase of 90 % or more of the entire microstructure. The volume fraction of ferrite phase is preferably 95 % or more. The volume fraction of ferrite phase is more preferably 98 % or more. Further, the residual microstructure other than the ferrite phase accounts for 10 % or less of the entire microstructure in volume fraction. The volume fraction of residual microstructure is preferably 5 % or less. The volume fraction of residual microstructure is more preferably 2 % or less. Further, the microstructure may be a ferrite single phase (volume fraction of 100 % relative to the entire microstructure). An example of residual microstructure is mainly martensite phase. Precipitates and inclusions are not included in the calculation of the volume fraction.

Here, identification of the microstructure (calculation of the volume fraction of the ferrite phase) may be carried out in accordance with a conventional method, for example, as follows. A test piece for cross-section observation is taken from the ferritic stainless steel for SOCs and subjected to etching treatment with a picric acid saturated hydrochloric acid solution. Next, the test piece for cross-section observation is observed under an optical microscope at a magnification of 100 times in ten fields of view, and the ferrite phase and the residual microstructure (such as the martensite phase) are identified from the microstructure shape and etching intensity. The volume fraction of the ferrite phase is then determined by image processing and an average value is calculated.

Further, the ferritic stainless steel for SOCs according to an embodiment of the present disclosure may be in the form of a plate (steel sheet) or a component, for example. The thickness of the ferritic stainless steel for SOCs in the form of a plate (steel sheet) or component (hereinafter also referred to simply as the thickness of the steel sheet) is not particularly limited. However, from the viewpoints of oxidation resistance, resistance to Cr poisoning, and workability, the thickness of the steel sheet is preferably 0.01 mm to 10.0 mm. The thickness of the steel sheet is more preferably 0.02 mm or more. The thickness of the steel sheet is even more preferably 0.03 mm or more. Further, the thickness of the steel sheet is more preferably 8.0 mm or less. The thickness of the steel sheet is even more preferably 2.0 mm or less.

SOECs operate at high temperatures of 500 °C to 1000 °C. The electrolyte of a SOEC is, for example, an ion-conductive solid electrolyte such as yttria-stabilized zirconia (YSZ) or gadolinia-doped ceria (CGO). Further, a fuel electrode made of Ni/YSZ (cermet of Ni and yttria-stabilized zirconia) or Ni/CGO (cermet of Ni and gadolinia-doped ceria) is attached to one side of the electrolyte. On the other side of the electrolyte, an air electrode such as $(La,Sr)MnO_3$ or $(La,Sr)(Co,Sr)O_3$ is attached.

Next, a preferred method of producing ferritic stainless steel for SOCs according to an embodiment of the present disclosure is described. Molten steel is prepared by smelting in a melting furnace such as a converter or an electric furnace. The molten steel is then subjected to secondary refining by ladle refining or vacuum refining to adjust the chemical composition as described above. The molten steel is then made into a semi-finished product (slab) by continuous casting or ingot casting and blooming. Continuous casting is preferred in terms of productivity and quality. The semi-finished product (slab) is then subjected to hot rolling to obtain a hot-rolled steel sheet. The hot-rolled steel sheet may be further subjected to additional processes such as hot-rolled sheet annealing and/or pickling. Hereinafter, when simply referring to a hot-rolled steel sheet, this is intended to include not only a steel sheet as hot-rolled (including a steel sheet obtained by subjecting a steel sheet as hot-rolled to pickling or the like) but also a so-called hot-rolled and annealed sheet (including a steel sheet obtained by subjecting a steel sheet as hot-rolled to hot-rolled sheet annealing, and a steel sheet obtained by further subjecting the steel sheet after hot-rolled sheet annealing to pickling or the like). Depending on the application, a hot-rolled steel sheet can be used as-is as a product without subjection to subsequent processes such as cold rolling (hereinafter also referred to as a "hot-rolled product"). For example, when producing the housing of an SOC, a hot-rolled steel sheet can be used as-is.

The hot-rolled steel sheet is then subjected to cold rolling to obtain a cold-rolled steel sheet. The cold-rolled steel sheet is then subjected to other processes such as finish annealing (cold-rolled sheet annealing) and pickling to make a product such as a cold-rolled and annealed sheet (hereinafter also referred to as a "cold-rolled product"). Examples of the cold-rolled and annealed sheet include a steel sheet obtained by subjecting a steel sheet as cold-rolled to final annealing (cold-rolled sheet annealing), and a steel sheet obtained by further subjecting the steel sheet after final annealing (cold-rolled sheet annealing) to pickling or the like. The atmosphere for the annealing is not particularly limited. As the final annealing, bright annealing (BA) may be carried out in a reducing atmosphere such as hydrogen, and pickling may be omitted. Prior to the pickling, descaling may be carried out, for example by shot blasting or mechanical descaling.

As described above, the ferritic stainless steel for SOCs according to an embodiment of the present disclosure can be produced.

The above processes may be performed under conditions in accordance with conventional methods. For example, when a semi-finished product (slab) is heated before hot rolling, a suitable temperature is 1050 °C to 1250 °C. The hot-rolled sheet annealing is preferably carried out in a temperature range of 900 °C to 1150 °C by continuous annealing. The cold rolling may be carried out once, or twice or more with intermediate annealing in between. From the viewpoint of productivity and required quality, the cold rolling is preferably carried out twice or more with intermediate annealing in between. Further, the cold rolling is carried out at a total rolling reduction of preferably 50 % or more. The total rolling reduction is more preferably 60 % or more. The final annealing (cold-rolled sheet annealing) is preferably carried out in a temperature range of 900 °C to 1150 °C by continuous annealing. A more preferable temperature range is 950 °C to 1100 °C. Further, depending on the application, the final annealing may be followed by skin pass rolling or the like to adjust the shape, roughness on the sheet surface, and material properties of the steel sheet.

The hot-rolled product and cold-rolled product obtained as described above are then subjected to processes such as cutting, bending, bulging, and drawing depending on the application, and are formed into SOC-related components, such as interconnectors and reformers.

Further, when forming such members, for example, arc welding such as metal inert gas (MIG), metal active gas (MAG), and tungsten inert gas (TIG), resistance welding such as spot welding and seam welding, high-frequency resistance welding such as electric resistance welding, and high-frequency induction welding can be applied.

EXAMPLES

Steel samples having the chemical compositions listed in Table 1 (with the balance being Fe and inevitable impurities) were prepared by smelting in a vacuum melting furnace and cast into 30 kg steel ingots. Each steel ingot was heated to 1250 °C and then formed into a sheet bar having a thickness of 30 mm by hot rolling. After being heated to 1150 °C, the sheet bar was hot rolled to obtain a hot-rolled steel sheet. The hot-rolled steel sheet was then subjected to hot-rolled sheet annealing at temperatures of 900 °C to 1150 °C, and then ground to obtain a hot-rolled and annealed sheet having a thickness of 4 mm. The hot-rolled and annealed sheet was then cold rolled to obtain a cold-rolled steel sheet. The cold-rolled steel sheet was then subjected to final annealing at a temperature of 750 °C to 1100 °C to obtain a cold-rolled and annealed sheet having a thickness of 1 mm. The front and back surfaces of the cold-rolled and annealed sheet were then polished with #800 emery paper, and the polished cold-rolled and annealed sheet was used to evaluate oxidation resistance, resistance to Cr poisoning, and electrical conductivity in the following ways. The evaluation results are listed in Table 2.

<Evaluation of oxidation resistance>

A sample of 1 mm x 20 mm x 20 mm was cut out from each cold-rolled and annealed sheet. After degreasing the sample with acetone, an oxidation test was carried out by holding the sample in a heating furnace under the following conditions (temperature and atmosphere) for 100 hours.

- Environment 1: Simulated environment of air electrode in power generation environment (SOFC operating environment)

    Atmosphere: 15 vol% $H_2O$ + 85 vol% air
    Temperature: 700 °C

- Environment 2: Simulated environment of air electrode in electrolytic environment (SOEC operating environment)

    Atmosphere: 50 vol% $H_2O$ + 50 vol% air
    Temperature: 700 °C

- Environment 3: Simulated environment of fuel electrode in electrolytic environment (SOEC operating environment)

    Atmosphere: 50 vol% $H_2O$ + 50 vol% hydrogen
    Temperature: 700 °C

The mass gain by oxidation of the samples was measured before and after the test, and the oxidation resistance in each environment was evaluated according to the following criteria. Here, the mass gain by oxidation is a value obtained by dividing the mass gain (mg) of the sample before and after the test by the surface area ($cm^2$) of the sample.

    A (pass, particularly good): mass gain by oxidation was 0.125 mg/$cm^2$ or less
    B (pass, good): mass gain by oxidation was more than 0.125 mg/$cm^2$ and 0.200 mg/$cm^2$ or less
    F (fail): mass gain by oxidation was more than 0.200 mg/$cm^2$
    Oxidation does not progress in a fuel electrode in a power generation environment (SOFC operating environment), and therefore evaluation in a simulated environment of a fuel electrode in a power generation environment (SOFC operating environment) was omitted.

<Resistance to Cr poisoning>

From each of the above cold-rolled and annealed sheets, a sample having the same shape as the sample used in the above evaluation of oxidation resistance was prepared. The prepared sample was loaded into a quartz sample holder in a quartz tubular furnace. The sample holder was placed centrally in the tubular furnace, and quartz wool was placed downstream of the sample holder to capture Cr evaporated from the sample. Next, as in Environment 1 for the evaluation of oxidation resistance, 15 vol% $H_2O$ + 85 vol% air was flowed into the tubular furnace, and the temperature inside the tubular furnace was held at 700 °C for 100 hours. Separately, similar samples were prepared and, as in Environments 2 and 3 for the evaluation of oxidation resistance, 50 vol% $H_2O$ + 50 vol% air and 50 vol% $H_2O$ + 50 vol% hydrogen were flowed into the tubular furnace, while the temperature inside the furnace was held at 700 °C for 100 hours. Air was taken from around the tubular furnace. After the temperature hold, all of the Cr adhering to the sample holder and the quartz wool was dissolved in an acid solution, and the Cr concentration in the acid solution was measured using an inductively coupled plasma mass spectrometer (ICP-MS). The amount of Cr contained in the acid solution was then calculated from the Cr concentration and the amount of acid solution. The amount of Cr evaporated from each sample was then calculated by dividing the amount of Cr in the acid solution by the surface area of the sample. The resistance to Cr poisoning in each environment was evaluated according to the following criteria.

    A (pass, particularly good): Cr evaporation amount was 2.0 $\mu$g/$cm^2$ or less
    B (pass, good): Cr evaporation amount was more than 2.0 $\mu$g/$cm^2$ and 5.0 $\mu$g/$cm^2$ or less
    F (fail): Cr evaporation amount was more than 5.0 $\mu$g/$cm^2$

<Evaluation of electrical conductivity>

After the evaluation of oxidation resistance, a 5 mm x 5 mm Pt paste was applied to the front and back surfaces of the sample used in the oxidation resistance evaluation, and the sample was dried at 675 °C for 30 min. The heating rate during heating before holding and the cooling rate during cooling after holding were both 4 °C/min. Pt mesh (10 mm $\times$ 10 mm) was then placed on the Pt paste-applied region on each of the front and back surfaces of each sample. The Pt mesh was prepared by joining Pt wires for current application and Pt wires for voltage measurement by point-welding. Each sample was then held for 30 min in a heating furnace heated to 700 °C with a load of 0.1 kgf/cm$^2$ applied. The heating rate during heating before holding was 4 °C/min. During this holding at 700 °C, a current was applied to each sample so that the current density was 0.5 A/cm$^2$ and the voltage at that point was measured to determine the electrical resistance value (sheet resistivity). The electrical resistance value was then measured for each sample three times, the results were averaged, and the electrical conductivity was evaluated based on the following criteria.

A (pass, particularly good): average electrical resistance value was 0.20 $\Omega \cdot$cm$^2$ or less
B (pass, good): average electrical resistance value was more than 0.20 $\Omega \cdot$cm$^2$ and 0.25 $\Omega \cdot$cm$^2$ or less
F (fail): average electrical resistance value was more than 0.25 $\Omega \cdot$cm$^2$

[Table 1]

Table 1

| Steel No. | Chemical composition (mass%) | | | | | | | | | | | | 0.03[Cr]+[Al] | 0.44[Si]+[Al] | Remarks |
|---|---|---|---|---|---|---|---|---|---|---|---|---|---|---|---|
| | C | Si | Mn | P | S | Cr | Al | Ni | Nb | Mo | N | Other | | | |
| A1 | 0.006 | 0.10 | 0.14 | 0.027 | 0.002 | 20.5 | 1.10 | 0.07 | 0.35 | 2.20 | 0.012 | | 1.72 | 1.14 | Conforming steel |
| A2 | 0.003 | 0.43 | 0.06 | 0.032 | 0.005 | 20.9 | 1.09 | 0.08 | 0.36 | 2.25 | 0.003 | | 1.72 | 1.28 | Conforming steel |
| A3 | 0.004 | 0.17 | 0.48 | 0.033 | 0.008 | 21.3 | 1.11 | 0.73 | 0.34 | 2.21 | 0.010 | | 1.75 | 1.18 | Conforming steel |
| A4 | 0.008 | 0.12 | 0.07 | 0.040 | 0.003 | 20.1 | 1.24 | 0.12 | 0.40 | 2.11 | 0.008 | | 1.84 | 1.29 | Conforming steel |
| A5 | 0.004 | 0.10 | 0.10 | 0.035 | 0.005 | 29.6 | 0.88 | 0.05 | 0.26 | 2.67 | 0.016 | | 1.77 | 0.92 | Conforming steel |
| A6 | 0.005 | 0.07 | 0.06 | 0.020 | 0.007 | 23.7 | 0.62 | 0.04 | 0.33 | 2.22 | 0.005 | | 1.33 | 0.65 | Conforming steel |
| A7 | 0.003 | 0.06 | 0.19 | 0.021 | 0.004 | 22.3 | 1.43 | 0.16 | 0.28 | 2.24 | 0.013 | | 2.10 | 1.46 | Conforming steel |
| A8 | 0.003 | 0.32 | 0.11 | 0.031 | 0.003 | 20.6 | 1.27 | 0.01 | 0.37 | 2.56 | 0.005 | | 1.89 | 1.41 | Conforming steel |
| A9 | 0.005 | 0.15 | 0.45 | 0.034 | 0.005 | 21.2 | 1.05 | 0.98 | 0.43 | 2.19 | 0.011 | | 1.69 | 1.12 | Conforming steel |
| A10 | 0.002 | 0.13 | 0.37 | 0.032 | 0.006 | 21.0 | 0.79 | 0.15 | 0.31 | 2.23 | 0.025 | | 1.42 | 0.85 | Conforming steel |
| A11 | 0.004 | 0.21 | 0.16 | 0.033 | 0.007 | 20.5 | 1.34 | 0.17 | 0.22 | 2.25 | 0.010 | | 1.96 | 1.43 | Conforming steel |
| A12 | 0.006 | 0.10 | 0.15 | 0.032 | 0.005 | 20.7 | 0.72 | 0.10 | 0.44 | 2.23 | 0.006 | | 1.34 | 0.76 | Conforming steel |
| A13 | 0.007 | 0.13 | 0.38 | 0.033 | 0.005 | 27.6 | 1.35 | 0.11 | 0.26 | 2.20 | 0.012 | | 2.18 | 1.41 | Conforming steel |
| A14 | 0.006 | 0.20 | 0.07 | 0.003 | 0.006 | 20.7 | 1.39 | 0.09 | 0.27 | 2.19 | 0.007 | | 2.01 | 1.48 | Conforming steel |

| Steel No. | Chemical composition (mass%) | | | | | | | | | | | | 0.03[Cr]+[Al] | 0.44[Si]+[Al] | Remarks |
|---|---|---|---|---|---|---|---|---|---|---|---|---|---|---|---|
| | C | Si | Mn | P | S | Cr | Al | Ni | Nb | Mo | N | Other | | | |
| A15 | 0.007 | 0.12 | 0.09 | 0.028 | 0.008 | 24.5 | 0.90 | 0.11 | 0.32 | 2.03 | 0.006 | | 1.64 | 0.95 | Conforming steel |
| Al6 | 0.005 | 0.12 | 0.10 | 0.034 | 0.007 | 21.0 | 0.83 | 0.05 | 0.30 | 2.88 | 0.005 | | 1.46 | 0.88 | Conforming steel |
| A17 | 0.008 | 0.25 | 0.07 | 0.035 | 0.006 | 26.2 | 1.03 | 0.09 | 0.28 | 2.64 | 0.020 | Cu: 0.49, V: 0.05 | 1.82 | 1.14 | Conforming steel |
| A18 | 0.008 | 0.16 | 0.12 | 0.030 | 0.003 | 21.3 | 1.13 | 0.08 | 0.35 | 2.41 | 0.006 | Cu: 0.10 | 1.77 | 1.20 | Conforming steel |
| A19 | 0.004 | 0.18 | 0.13 | 0.039 | 0.004 | 21.4 | 1.04 | 0.05 | 0.34 | 2.57 | 0.009 | W: 1. 18 | 1.68 | 1.12 | Conforming steel |
| A20 | 0.003 | 0.11 | 0.19 | 0.023 | 0.005 | 21.8 | 1.09 | 0.16 | 0.36 | 2.23 | 0.006 | Co: 0.05, Zr: 0.07 | 1.74 | 1.14 | Conforming steel |
| A21 | 0.005 | 0.13 | 0.20 | 0.033 | 0.004 | 20.7 | 0.97 | 0.13 | 0.32 | 2.19 | 0.005 | Ti: 0.15, REM: 0.09, Ca: 0.0010 | 1.59 | 1.03 | Conforming steel |
| A22 | 0.004 | 0.12 | 0.12 | 0.036 | 0.006 | 20.5 | 1.13 | 0.14 | 0.33 | 2.23 | 0.008 | B: 0.0008, V: 0.02, Mg:0.0002 | 1.75 | 1.18 | Conforming steel |
| A23 | 0.007 | 0.11 | 0.10 | 0.030 | 0.005 | 20.8 | 1.14 | 0.12 | 0.34 | 2.22 | 0.007 | Ti: 0.97 | 1.76 | 1.19 | Conforming steel |
| A24 | 0.005 | 0.13 | 0.13 | 0.028 | 0.006 | 21.1 | 1.07 | 0.08 | 0.34 | 2.36 | 0.006 | REM: 0.14, W:2.22 | 1.70 | 1.13 | Conforming steel |
| A25 | 0.006 | 0.09 | 0.11 | 0.029 | 0.005 | 20.7 | 1.10 | 0.09 | 0.36 | 2.15 | 0.006 | Co: 0.91 | 1.72 | 1.14 | Conforming steel |
| B1 | 0.007 | 0.10 | 0.10 | 0.032 | 0.008 | **_16.9_** | 1.07 | 0.05 | 0.31 | 2.21 | 0.005 | | 1.58 | 1.11 | Comparative steel |
| B2 | 0.006 | 0.08 | 0.09 | 0.036 | 0.007 | 20.3 | **_0.55_** | 0.11 | 0.33 | 2.36 | 0.008 | | 1.16 | 0.59 | Comparative steel |
| B3 | 0.005 | 0. 11 | 0.08 | 0.042 | 0.009 | 28.4 | 1.40 | 0.14 | 0.38 | 2.04 | 0.006 | | **_2.25_** | 1.45 | Comparative steel |

EP 4 715 079 A1

(continued)

| Steel No. | Chemical composition (mass%) | | | | | | | | | | | | 0.03[Cr]+[Al] | 0.44[Si]+[Al] | Remarks |
|---|---|---|---|---|---|---|---|---|---|---|---|---|---|---|---|
| | C | Si | Mn | P | S | Cr | Al | Ni | Nb | Mo | N | Other | | | |
| B4 | 0.007 | 0.37 | 0.15 | 0.033 | 0.001 | 20.2 | 1.39 | 0.16 | 0.34 | 2.17 | 0.006 | | 2.00 | **_1.55_** | Comparative steel |
| B5 | 0.004 | **_0.72_** | 0.11 | 0.035 | 0.006 | 20.9 | 1.05 | 0.10 | 0.32 | 2.25 | 0.005 | | 1.68 | 1.37 | Comparative steel |
| B6 | 0.007 | 0.11 | **_0.65_** | 0.035 | 0.007 | 20.1 | 1.20 | 0.07 | 0.29 | 2.29 | 0.007 | | 1.80 | 1.25 | Comparative steel |
| B7 | 0.008 | 0.10 | 0.12 | 0.035 | 0.008 | 20.2 | **_1.62_** | 0.18 | 0.27 | 2.26 | 0.006 | | 2.23 | **_1.66_** | Comparative steel |
| B8 | 0.006 | 0.15 | 0.16 | 0.033 | 0.003 | 20.5 | 0.84 | 0.16 | **_0.08_** | 2.33 | 0.006 | | 1.46 | 0.91 | Comparative steel |
| B9 | 0.005 | 0.11 | 0.10 | 0.035 | 0.005 | 20.6 | 1.12 | 0.15 | 0.37 | **_0.85_** | 0.006 | | 1.74 | 1.17 | Comparative steel |
| B10 | 0.004 | 0.13 | 0.11 | 0.032 | 0.006 | 21.1 | 1.08 | **_1.22_** | 0.31 | 2.34 | 0.007 | | 1.71 | 1.14 | Comparative steel |
| B11 | 0.003 | **_0.03_** | 0.14 | 0.033 | 0.004 | 22.7 | 1.11 | 0.14 | 0.35 | 2.13 | 0.005 | | 1.79 | 1.12 | Comparative steel |
| B12 | 0.004 | 0.13 | 0.11 | 0.032 | 0.006 | **_32.3_** | 1.13 | 0.16 | 0.28 | 2.05 | 0.008 | | 2.10 | 1.19 | Comparative steel |

EP 4 715 079 A1

14

[Table 2]

Table 2

| Steel No. | Evaluation result | | | | | | | | | Remarks |
|---|---|---|---|---|---|---|---|---|---|---|
| | Oxidation resistance | | | Resistance to Cr poisoning | | | Electrical conductivity | | | |
| | Environment 1 | Environment 2 | Environment 3 | Environment 1 | Environment 2 | Environment 3 | Environment 1 | Environment 2 | Environment 3 | |
| A1 | A | A | A | A | A | A | A | A | B | Example |
| A2 | A | A | A | A | A | A | A | A | B | Example |
| A3 | A | A | A | A | A | A | A | A | B | Example |
| A4 | A | A | A | A | A | A | A | A | B | Example |
| A5 | A | A | A | A | A | A | A | A | A | Example |
| A6 | A | A | A | A | A | A | A | A | A | Example |
| A7 | A | A | A | A | A | A | A | A | B | Example |
| A8 | A | A | A | A | A | A | A | A | B | Example |
| A9 | A | A | A | A | A | A | A | A | B | Example |
| A10 | A | A | A | A | A | A | A | A | A | Example |
| A11 | A | A | A | A | A | A | A | A | B | Example |
| A12 | A | A | A | A | A | A | A | A | A | Example |
| A13 | A | A | A | A | A | A | A | A | B | Example |
| A14 | A | A | A | A | A | A | A | A | B | Example |
| A15 | A | A | A | A | A | A | A | A | A | Example |
| A16 | A | A | A | A | A | A | A | A | A | Example |
| A17 | A | A | A | A | A | A | A | A | B | Example |
| A18 | A | A | A | A | A | A | A | A | B | Example |
| A19 | A | A | A | A | A | A | A | A | B | Example |
| A20 | A | A | A | A | A | A | A | A | B | Example |
| A21 | A | A | A | A | A | A | A | A | A | Example |
| A22 | A | A | A | A | A | A | A | A | B | Example |
| A23 | A | A | A | A | A | A | A | A | B | Example |
| A24 | A | A | A | A | A | A | A | A | B | Example |
| A25 | A | A | A | A | A | A | A | A | B | Example |
| B1 | A | B | B | B | F | A | B | F | B | Comparative Example |
| B2 | A | F | F | F | F | A | B | B | B | Comparative Example |
| B3 | A | A | A | A | A | A | F | F | F | Comparative Example |
| B4 | A | A | A | A | A | A | F | F | F | Comparative Example |
| B5 | A | A | A | A | A | A | F | F | F | Comparative Example |
| B6 | A | F | F | B | F | A | A | B | B | Comparative Example |
| B7 | A | A | A | A | A | A | F | F | F | Comparative Example |
| B8 | F | F | F | F | F | A | B | B | B | Comparative Example |
| B9 | B | F | F | B | F | A | B | B | B | Comparative Example |
| B10 | F | F | F | F | F | A | F | F | F | Comparative Example |
| B11 | B | F | F | B | F | A | A | A | A | Comparative Example |
| B12 | A | B | B | F | F | B | F | F | F | Comparative Example |

As illustrated in Table 2, all of the Examples had excellent electrical conductivity in all of the environments 1 to 3, and also had excellent oxidation resistance and resistance to Cr poisoning in an environment containing high-temperature water vapor.

In contrast, among the Comparative Examples, for Steel No. B1, the Cr content was below the appropriate range, and therefore sufficient resistance to Cr poisoning in Environment 2 and sufficient electrical conductivity in Environment 2 were not obtained.

For Steel No. B2, the Al content was below the appropriate range, and therefore sufficient oxidation resistance in Environments 2 and 3 and sufficient resistance to Cr poisoning in Environments 1 and 2 were not obtained.

For Steel No. B3, expression (1) was not satisfied, and therefore sufficient electrical conductivity in Environments 1 to 3 was not obtained.

For Steel No. B4, expression (2) was not satisfied, and therefore sufficient electrical conductivity in Environments 1 to 3 was not obtained.

For Steel No. B5, the Si content exceeded the appropriate range, and therefore sufficient electrical conductivity in Environments 1 to 3 was not obtained.

For Steel No. B6, the Mn content exceeded the appropriate range, and therefore sufficient oxidation resistance in Environments 2 and 3 and sufficient resistance to Cr poisoning in Environment 2 were not obtained.

For Steel No. B7, the Al content exceeded the appropriate range, and therefore sufficient electrical conductivity in Environments 1 to 3 was not obtained.

For Steel No. B8, the Nb content was below the appropriate range, and therefore sufficient oxidation resistance in Environments 1 to 3 and resistance to Cr poisoning in Environments 1 and 2 were not obtained.

For Steel No. B9, the Mo content was below the appropriate range, and therefore sufficient oxidation resistance in Environments 2 and 3 and resistance to Cr poisoning in Environment 2 were not obtained.

For Steel No. B10, the Ni content exceeded the appropriate range, and therefore sufficient oxidation resistance in Environments 1 to 3, resistance to Cr poisoning in Environments 1 and 2, and sufficient electrical conductivity in Environments 1 to 3 were not obtained.

For Steel No. B11, the Si content was below the appropriate range, and therefore sufficient oxidation resistance in Environments 2 and 3 and sufficient resistance to Cr poisoning in Environment 2 were not obtained.

For Steel No. B12, the Cr content exceeded the appropriate range, so sufficient resistance to Cr poisoning in Environments 1 and 2 and sufficient electrical conductivity in Environments 1 to 3 were not obtained.

INDUSTRIAL APPLICABILITY

The ferritic stainless steel for SOCs according to an embodiment of the present disclosure can be used for SOCs (solid oxide electrochemical cells), particularly for interconnectors and peripheral components of SOCs, such as heat exchangers and reformers. Further, the ferritic stainless steel for SOCs of the present disclosure can be suitably used not only for SOCs but also as material for automobiles and the like, as well as for boilers, gas turbines, and the like, where material degradation due to volatilization of Cr oxides can be a problem.

REFERENCE SIGNS LIST

1: electrolyte
2: air electrode
3: fuel electrode
4: interconnector (separator)
5: fuel gas (hydrogen gas)
6: oxidizing gas (air)
7: gas flow path

**Claims**

1. Ferritic stainless steel for solid oxide electrochemical cells, the ferritic stainless steel comprising a chemical composition containing, in mass%,

   C: 0.010 % or less,
   Si: 0.05 % to 0.50 %,
   Mn: 0.05 % to 0.50 %,
   P: 0.050 % or less,
   S: 0.010 % or less,
   Cr: 20.0 % to 30.0 %,
   Al: 0.60 % to 1.50 %,
   Ni: 1.00 % or less,
   Nb: 0.20 % to 0.45 %,
   Mo: 2.00 % to 2.90 %, and
   N: 0.025 % or less,
   with the balance being Fe and inevitable impurities,
   satisfying the relationships of the following expressions (1) and (2):

$$0.03 \times [Cr] + [Al] \leq 2.20 \qquad \dots(1)$$

$$0.44 \times [Si] + [Al] \leq 1.52 \qquad \dots(2)$$

where [Si], [Cr], and [Al] are the contents, in mass%, of Si, Cr, and Al in the chemical composition, respectively.

2. The ferritic stainless steel for solid oxide electrochemical cells according to claim 1, wherein the chemical composition further contains, in mass%, one or more selected from the group consisting of

Cu: 0.50 % or less,
Co: 1.00 % or less, and
W: 3.00 % or less.

3. The ferritic stainless steel for solid oxide electrochemical cells according to claim 1 or 2, wherein the chemical composition further contains, in mass%, one or more selected from the group consisting of

Ti: 1.00 % or less,
V: 1.00 % or less,
Zr: 0.50 % or less,
B: 0.0050 % or less,
Mg: 0.0050 % or less,
Ca: 0.0050 % or less, and
REM: 0.20 % or less.

# FIG. 1

## INTERNATIONAL SEARCH REPORT

| International application No. |
|---|
| **PCT/JP2024/027812** |

**A.     CLASSIFICATION OF SUBJECT MATTER**

*C22C 38/00*(2006.01)i; *C21D 9/46*(2006.01)i; *C22C 38/48*(2006.01)i; *C22C 38/54*(2006.01)i; *C25B 9/60*(2021.01)i;
*C25B 13/04*(2021.01)i; *H01M 8/12*(2016.01)i; *H01M 8/021*(2016.01)i
FI:   C22C38/00 302Z; C22C38/48; C22C38/54; H01M8/021; C21D9/46 R; H01M8/12 101; C25B9/60; C25B13/04 302

According to International Patent Classification (IPC) or to both national classification and IPC

**B.     FIELDS SEARCHED**

Minimum documentation searched (classification system followed by classification symbols)

C22C38/00; C21D9/46; C22C38/48; C22C38/54; C25B9/60; C25B13/04; H01M8/12; H01M8/021

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C.     DOCUMENTS CONSIDERED TO BE RELEVANT**

| Category* | Citation of document, with indication, where appropriate, of the relevant passages | Relevant to claim No. |
|---|---|---|
| X | WO 2021/177063 A1 (JFE STEEL CORPORATION) 10 September 2021 (2021-09-10) paragraphs [0026]-[0052], [0057]-[0060], tables 1-2 | 3 |
| A | | 1-2 |
| A | WO 2018/122947 A1 (HONDA MOTOR CO., LTD.) 05 July 2018 (2018-07-05) | 1-3 |
| A | JP 2010-236012 A (NISSHIN STEEL CO., LTD.) 21 October 2010 (2010-10-21) | 1-3 |
| A | WO 2020/080104 A1 (JFE STEEL CORPORATION) 23 April 2020 (2020-04-23) | 1-3 |

☐ Further documents are listed in the continuation of Box C.          ☑ See patent family annex.

| | |
|---|---|
| *     Special categories of cited documents: | "T"   later document published after the international filing date or priority date and not in conflict with the application but cited to understand the principle or theory underlying the invention |
| "A"   document defining the general state of the art which is not considered to be of particular relevance | |
| "D"   document cited by the applicant in the international application | "X"   document of particular relevance; the claimed invention cannot be considered novel or cannot be considered to involve an inventive step when the document is taken alone |
| "E"   earlier application or patent but published on or after the international filing date | |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| **15 October 2024** | **29 October 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**EP 4 715 079 A1**

## INTERNATIONAL SEARCH REPORT
### Information on patent family members

International application No.

**PCT/JP2024/027812**

| Patent document cited in search report | | | Publication date (day/month/year) | Patent family member(s) | | | Publication date (day/month/year) |
|---|---|---|---|---|---|---|---|
| WO | 2021/177063 | A1 | 10 September 2021 | US | 2023/0119504 | A1 | |
| | | | | paragraphs [0076]-[0129], [0144]-[0159], tables 1-2 | | | |
| | | | | EP | 4116454 | A1 | |
| | | | | KR | 10-2022-0127296 | A | |
| | | | | CN | 115151671 | A | |
| | | | | TW | 202136540 | A | |
| | | | | TW | 202348816 | A | |
| WO | 2018/122947 | A1 | 05 July 2018 | US | 2019/0144980 | A1 | |
| | | | | GB | 2564631 | A | |
| | | | | CN | 109196130 | A | |
| JP | 2010-236012 | A | 21 October 2010 | (Family: none) | | | |
| WO | 2020/080104 | A1 | 23 April 2020 | (Family: none) | | | |

20

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H07166301 A
- JP H07145454 A
- JP H09157801 A
- JP H10280103 A
- JP 2003187828 A
- JP 2005206884 A
- WO 2018008658 A1